# EUROPEAN PATENT SPECIFICATION

(11) **EP 0 886 553 B1**
(45) Date of publication and mention of the grant of the patent: **29.10.2003**
(21) Application number: 96926866.3
(22) Date of filing: 01.08.1996
(51) Int. Cl.: B23F 21/03, B24D 15/06, B24B 3/60

(54) **APPARATUS FOR FINISHING SURFACES**
FEINSTBEARBEITUNGSVORRICHTUNG FÜR OBERFLÄCHEN
DISPOSITIF DE FINITION DE SURFACES

(30) Priority: 02.08.1995 US 510530
(43) Date of publication of application: 30.12.1998
(60) Divisional application: 03005799.6
(73) Proprietor: Bleier, Larry P., Endicott, NY 13760 (US)
(72) Inventor: Bleier, Larry P., Endicott, NY 13760 (US)
(74) Representative: Lomas, Geoffrey Michael
(86) International application number: PCT/US96/12652
(87) International publication number: WO 97/004909

(56) References cited:
- DE-C- 3 934 365
- DE-U- 7 513 884
- GB-A- 2 040 744
- US-A- 730 706
- US-A- 2 743 561
- US-A- 2 798 344
- US-A- 3 797 334
- US-A- 4 696 129
- US-A- 5 101 600
- US-A- 5 520 574

## Description

### Field of the Invention

The invention relates to finishing metallic and non-metallic surfaces by abrasion techniques.

### Brief Description of Related Art

The literature is replete with descriptions of apparatus and methods for finishing the surfaces of a variety of articles of manufacture. Representative of such articles are tools and instruments, many having complex geometric shapes and curvilinear surfaces.

One of the problems in finishing complex surfaces, especially curvilinear surfaces, is the need to draw the article across an abrasive surface while continuously changing the angle so as to accommodate the geometric shape thereof. The finishing of complex surfaces usually requires skilled hands and experienced craftspeople. Even experts find it difficult to follow many complex surface shapes, due to the demanding control required.

In the manufacturing industry, establishing conditions for a finishing process to obtain a specified surface topography is also not problem free, since many interacting factors are involved. Under ideal circumstances, the factors to be considered involve the operational setting of the machine (e.g., the geometric characteristics of the abrasive tool, the work speed, the tool feed rate and the type of cutting fluid used). Even under ideal conditions it has been only possible to calculate the theoretical roughness developed in a machining operation for the simplest process, i.e., single-point tool cutting. The fact that it is not possible to fully specify the character and surface roughness scale and topography of a surface remains a serious problem for production/design engineers.

One aspect of the present invention concerns the finishing of surfaces on tools and instruments. For example, dental, veterinary and medical instruments may have sophisticated shapes which can only be obtained with an exacting and complex finishing procedure.

For example, the U.S. Patents 4,509,268 (Marquam et al.) and 4,821,462 (Moore) describe apparatus for sharpening dulled surfaces of dental curets. Marquan et al. says "A common sharpening error encountered is failure to restore the cutting edge to the proper angle. Another common error is failure to maintain the proper blade shape with the cutting edges parallel and the toe smoothly rounded". Marquam et al. approaches the problem by providing an adjustable protractor-like guide for positioning the curet blade at a proper angle with a flat sharpening stone. The operation of the guide requires the operator to determine the proper angle (various curets having different blade angles) and to sight along the guide to determine that the proper angle has been selected. It is necessary to re-position the curet for a second blade edge angle. Moore in the later U.S. Patent 4,821,462 describes a similar protractor device, improved by the association with a pair of flat, spaced apart sharpening stones and an index for identifying the proper angle of an inserted blade. The difficulty with both devices remains in that a degree of training and expertise is required to use them, including the knowledge of proper angles required. In the hands of the untrained, a curet can be damaged beyond repair.

DE 3934365 C1 discloses a device for sharpening surgical instruments comprising two opposed arcuate sharpening blocks each having a number of arcuate sharpening grooves. A curet is successively mounted by a technician on different holders on the device so that the end of the curet is successively sharpened or profiled against one side wall of each groove.

The present invention is an apparatus that will accurately provide an exactly shaped cutting edge to a dental curet. The apparatus not only provides an exact shape for the curet cutting edge, but it does so with precision every time. A reason that this apparatus works so well is its simplicity. With this apparatus, the dentist or technician performing the finishing need not be as careful in drawing the instrument across the abrasive surface. Although the instrument itself is generally held at certain angles with respect to the abrasive surface, even this is not critical. The apparatus of the invention has one or more specifically shaped abrasive surfaces to guide and finish the instrument surface. These abrasive surfaces create an exact shape for the cutting edge of the curet. The shape provides the fineness and delicacy of its original design.

Reported at the recent 1996 World Workshop in Clinical Periodontics, was the extensive review of the current literature by Quirynen and Bollen. Using an evidenced based approach, they concluded that both surface free energy and roughness play major roles in the initial adhesion and retention of oral microbes. Quirymen and Bollen reported the above findings to be of sufficient importance to demand clinical attention during therapy, to achieve the smoothest possible root surface. Therefore, the abrasive surface component of the apparatus of the invention creates not only an exact shape of the desired cutting edge of a curet, but a cutting edge with the proper edge fineness and delicacy required in dentistry based on current research.

The present invention is, however, not limited to the finishing of tools and instruments for use in the medical, dental and veterinary arts. The present invention reflects the discovery that many surfaces can be carefully finished, shaped or sharpened to obtain the objectives required. This may be carried out by placing them in contact with abrasive surfaces that mirror completely, or partially and selectively, the desired surfaces of the objects to be finished. The present invention will aid in achieving the objectives of a specified manufacturing process (for example, surface topography or surface geometry, cross-sectional geometry, and surface finishing) by providing apparatus having abrasive surfacing contours that have selectively planned abrading contact areas and relief surfaces (noncontacting areas) to permit a desired outcome of a finishing process. One of the main advantages of this invention over the prior art is that the apparatus of the invention has built-in, selectively placed relief surfaces. By controlled movements of the tool or instrument, or part thereof, through the apparatus, one can impart a specific finish such as shaping, grinding, polishing, cleaning, buffing or sharpening to selected surface zones, while leaving other zones unfinished.

The movement of the tool or instrument, or part thereof, can be independently, or dependently with the abrasive surfaces and relief surfaces in multiple or single-spatial planes such as linear, elliptical, or circular, depending upon the finishing objectives and surface configuration.

The relief surfaces also provide a means by which abrasive residues can be removed from interfering with the apparatus operation during the finishing process and to direct introduced dry and liquid cutting fluids, lubricants and gases, such as graphites for temperature and lubrication control.

The relief surfaces provide a means by which certain surface zones on articles to be finished can be left undisturbed while contiguous zones are abraded or shaped. This results in the desired shape (by selectively abrading and selectively non-abrading).

This invention differs from the prior sharpening arts due to its selective, reshaping capabilities, as well as its ability to resharpen a tool's worn surfaces. In other words, surfaces can be selectively and specifically shaped to restore the complex angles and shapes of the working edges of an instrument, or a component of a complex machine or apparatus/device.

Metal surfaces are finished (non-metal can also be finished with the apparatus of the invention) by abrasion. Metal articles include, without limitation, screws, arrow heads, hammer heads and drill bits. Almost any instrument, tool or surface that can be drawn or turned on an abrasive surface can be finished by the apparatus of this invention.

To date, there is no non-automated finishing device that will produce the proper cutting: edge for the complicated, intricate type of instruments employed by hygienists, dentists, doctors and veterinarians. The earlier sharpening devices or procedures are very crude and unrefined with respect to maintaining small, delicate surface shapes of a curet. Additionally, the cutting edge of a dental curet is often delicately shaped during manufacture. The attempt to shape and, therefore, accurately reproduce this cutting edge to its original, precise surface configuration is rendered futile when utilizing a flat, sharpening stone.

The invention contemplates a variety of finishing processes. In other words, this invention has an objective that differs from simple sharpening required of such devices as razor blades, knives and other sharp edges having flat surfaces meeting at an edge. Human medical, veterinary and dental care require and deserve dental and medical instruments that are of superior and sophisticated shapes, shapes which must be maintained with exacting and complex detail.

US Patent 4 696 129 relates generally to a honing device, and more particularly, to a honing device for simultaneously honing a plurality of discrete, straight edged cutting elements secured to a common mount. The honing device comprises two, planar, cutting surfaces mounted adjacent one another.

### SUMMARY OF THE INVENTION

According to the present invention there is provided an apparatus for finishing at least one zone on the curvilinear surface of an article of manufacture, said surface comprising a plurality of adjacent and contiguous zones, which comprises;
means for supporting a rigid abrasive surface; said means containing at least one groove;
an inflexible, abrasive surface supported on the means for supporting such that the abrasive surface lines the groove;
said abrasive surface having
   (i) a cross-sectional profile which comprises a negative image of a profile of the at least one zone, of a lateral curvilinear surface of the article, to be finished; and
   (ii) a relief corresponding to the zone or zones to remain unfinished, said relief being positioned intermediate two active cutting surfaces of said abrasive surface and being incapable of contact with any surface of the article of manufacture, said cutting surfaces, in use, both laterally guiding and finishing said at least one zone.

According to the present invention there is also provided a method for finishing at least one zone on a curvilinear surface of an article of manufacture, said surface comprising a plurality of adjacent and contiguous zones, which comprises the following steps:
providing means for supporting a rigid abrasive surface, said means containing at least one groove;
providing an inflexible, abrasive surface supported on the means for supporting such that the abrasive surface lines the groove with said abrasive surface having
   (i) a cross-sectional profile which comprises a negative image of a profile of the at least one zone, of a lateral curvilinear surface of the article, to be finished;
   (ii) a relief corresponding to the zone or zones to remain unfinished, said relief being positioned intermediate two active cutting surfaces of said abrasive surface and being incapable of contact with any surface of the article of manufacture; and
moving said at least one zone of the surface of the article of manufacture along said abrasive surface for finishing said at least one zone, said cutting surfaces both guiding laterally and finishing said at least one zone.

The terms "finishing" and "finished" as used throughout the specification and claims are used in their dictionary sense as meaning to give a desired surface effect. The desired surface effect may be, for example, a smoothing, a roughening, or the removal of a blemish. The processes of "finishing" contemplated comprise abrasion, which is defined as a wearing away by rubbing or scraping.

Articles of manufacture which may be finished employing the apparatus of the invention may be metallic or non-metallic in nature. Representative of such materials are wood, ceramic, synthetic or natural polymeric resins, minerals and metals or metal alloys and the like. Specific articles of manufacture include, without limitation, hardware, decorative hardware, tools, instruments, fasteners, vehicle components and parts, gears, screws, jewelry, tableware, glassware and the like. Of particular advantage for finishing with the apparatus of the invention are articles with compound surfaces, i.e., curvilinear or like complex shapes and angularities.

### BRIEF DESCRIPTION OF THE DRAWINGS

**Figure 1** is a side view of the blade end of a Gracey curet (prior art);
**Figure 2** is a cross-sectional view along lines 2-2 of Figure 1 (prior art);
**Figure 3** is a cross-sectional side elevation (enlarged) of the Gracey curet shown in Figures 1 and 2, positioned in a schematic diagram of apparatus of the invention;
**Figures 4-6** are cross-sectional side elevations of an alternative embodiment abrasive surfaces employed in the apparatus of the invention.

### DETAILED DESCRIPTION OF THE PREFERRED EMBODIMENTS OF THE INVENTION

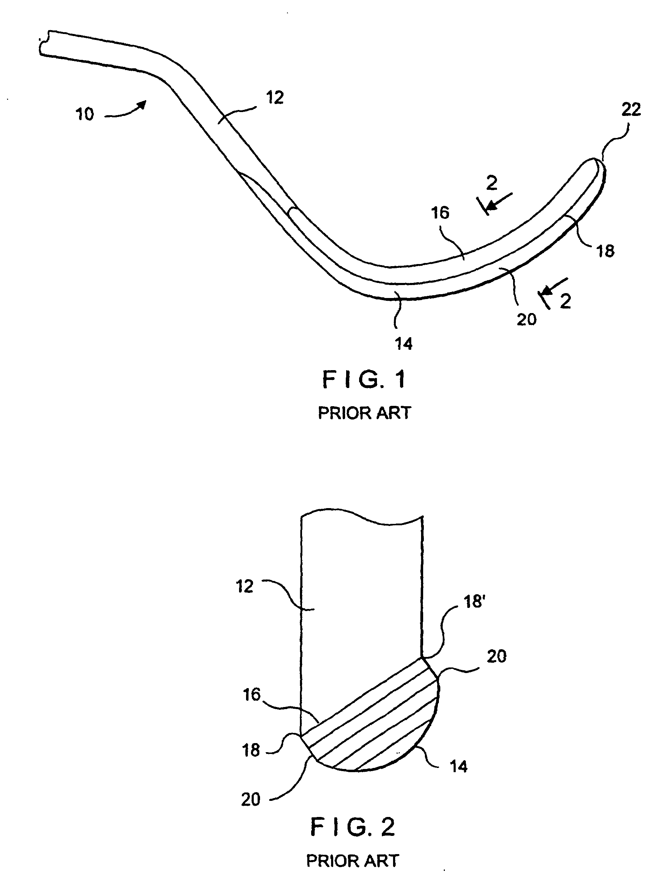

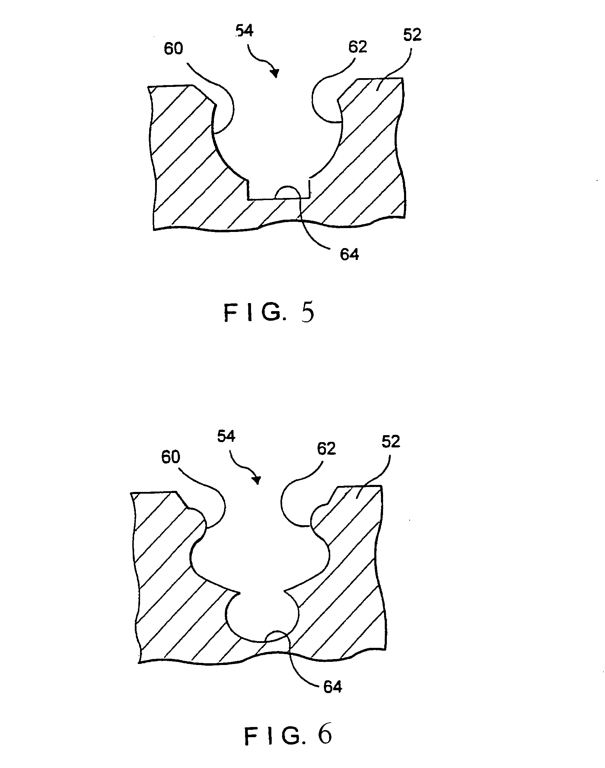

Those skilled in the art will gain an appreciation of the invention from a reading of the following description of the preferred embodiments viewed with the drawings of the accompanying Figures 1-6. The apparatus of the invention is most advantageously used to finish the surfaces of curvilinear shaped surfaces.

It is well known in the dental, veterinary and medical arts that sharp, well maintained and properly shaped instruments provide better acuity and performance. This is universally true regarding each and every medical, veterinary or dental instrument having a cutting or probing edge. The apparatus of the invention is particularly advantageous for use in finishing cutting surfaces of medical, veterinary and dental instruments. For example, dental scaling instruments, some of which have long, curved cutting edges, such as curets, need to be sharpened frequently in order to function in the efficacious removal of bacterial plaque, calculus (tartar deposits), and necrotic and/or diseased cementum from the surfaces of teeth crowns and their roots; see for example the U.S. Patent 4,821,462 described above. The sharpening of the curved edge of the scaling tool produces a scaling surface that more readily and easily removes scale from a tooth, and the creation of the smoothest possible surface and shape of the treated tooth. Scale removal can be improved by a finishing of the scaler's edge; this can also be accomplished with the exertion of less pressure. Such finishing also results in providing a dentist or technician with an increase in tactile sensitivity, dexterity and control of the instrument. These instruments are placed below the gingiva and especially between adjacent tooth surfaces and when out of visual contact, there is a required dependency on increased tactile sensitivity for their use.

Dental scalers are usually sharpened and shaped on a flat stone with a repeated reciprocal stroking, in a fashion that is similar to sharpening a knife blade. The difference, however, between the procedure of sharpening a knife blade and that of sharpening and shaping a dental scaling instrument is the degree of exercised control required in order to produce the optimum, i.e., the proper surface finish. In providing a keen edge for a curet the exact angle at which the instrument contacts the sharpening stone is critical. For purposes of this description, the word "curet" is used to refer to all medical and dental instruments in the class, including, but not limited to, curets or "curettes", scalers, hoes, files, sickles, explorers, and the like.

In dentistry, the use of curets is well known. These have acute cutting edges, which dull quickly with use. In fact, due to the frequency with which these cutting edges become dull and worn, during clinical use, the human tendency is to neglect sharpening them as often as necessary.

The device currently used to sharpen the cutting edge of a curet is a flat, abrasive stone. While the abrasive stone is adequate for the sharpening of some simple scaling instruments, it does not accurately and precisely finish the correct shape and surface of the more complex designs of many instruments used in dentistry, veterinary medicine and medicine.

Referring now to Figure 1, there is seen a side view of a blade end of a Gracey curet as a representative prior art dental scaling instrument. the curet 10 has a shank 12, and a distal or blade end having a back 14, a face 16 and a cutting edge 18 delineated by the angular meeting between face 16 and lateral surface 20. the edge 18 terminates at the toe 22. Further details of the prior art curet 10 structure may be seen in Figure 2, a cross-sectional view along lines 2-2 of Figure 1. As seen in Figure 2, a second cutting edge 18' is delineated at the boundary between lateral surface 20 and face 16. The lateral surface 20 is curvilinear, and forms a part of a circle or ellipse. For purposes of illustration, the cutting edges 18 and 18' are shown as sharp and angular (about 85 degrees) at the juncture of face 16 and the lateral surface 20. When the cutting edges 18 and 18' at their juncture with surface 20 are flattened from clinical use, a condition of dulling exists. To restore a sharp cutting edges 18 or 18' the lateral surface 20 must be abraded away to recreate the original clearance angle. It will be appreciated that, as described above, the curvature of surface 20 is critical if the original shape of the curet 10 is to be conserved while finishing and restoring the cutting edges 18 or 18' in sharpness. This is accomplished readily and easily using the apparatus of the invention.

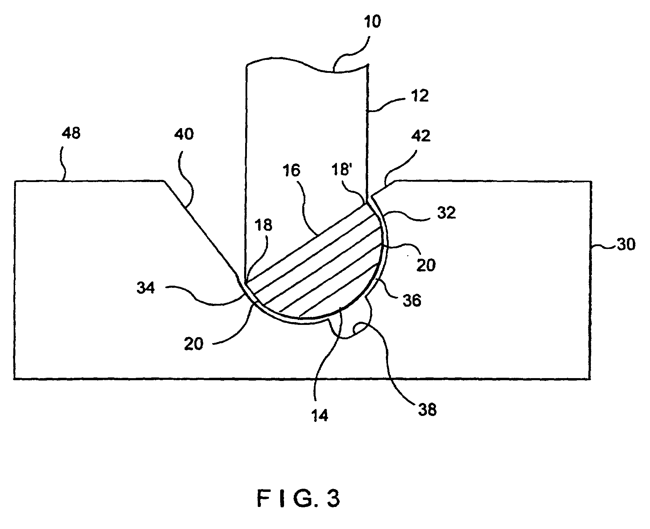

Referring now to Figure 3, there is seen a schematic cross-sectional side elevation as shown in Figure 2 (but enlarged) of the cutting edges of a Gracey curet 10 positioned in relationship to apparatus of the invention. The apparatus of the invention comprises a support means 30 for supporting an inflexible, rigid abrasive surface 32. As can be appreciated from Figure 3, the abrasive surface 32 has a substantial portion which in cross-sectional profile is a negative image of the cross-sectional image of the lateral surface 20 of curet 10. In fact, the lateral surface 20 of curet 10 finds a corresponding mirror image in portions 34, 36 of abrasive surface 32. the portions 38, 40 and 42 of abrasive surface 32 are reliefs, not projecting towards the inserted curet 10 and therefore incapable of contact with any surface of the curet 10. In this way, during finishing of curet 10 lateral surface 20, the back 14 of curet 10 and the shank 12, which are surface zones contiguous to lateral surface 20 which remain unexposed to modification by finishing. For purposes of illustration, the lateral surfaces 20 adjacent to edges 18, 18' are shown in Figure 3 as flattened, i.e., dulled. By abrading away portions of the lateral surface 20 to correspond them to the profile of abrasive surface 32, the original, sharp condition is restored. As shown in the Figure 3, the lateral surface 20 adjacent to the cutting edge 18 will be abraded away by portion 34 of abrasive surface 32, thereby restoring the proper cutting edge 18 and configuration of the lateral surface 20, upon reciprocal motion of the curet 10 against portion 34 of abrasive surface 32. By movement of the shank 12 of curet 10 to the left, lateral surface 20 adjacent cutting edge 18' is brought into physical contact with portion 36 of abrasive surface 32 if one wishes to finish this cutting edge 18' and again lateral surface 20. Other types of curet, where the blade face 16 is horizontal to the normal (parallel to surface 48) can be finished in one movement against abrasive surface 32, since both portions 34, 36 will be in simultaneous contact with the lateral surface 20 adjacent both cutting edges 18, 18'.

A finishing apparatus in the form a block of hardened abrasive material can be manufactured with different grooves which correspond to the different blade end shapes and tip sizes that are needed for various dental, veterinary, or medical instruments. Drawing the cutting edge of the curet 10 through a particular groove will impart with precision a particular shape to the end of the tool. The working edge of the instrument so shaped by this invention will then be provided with a cutting edge that will approach the original precision of the original item.

Those skilled in the art will appreciate from the description above of the apparatus of the invention that in one embodiment, there is provided a finishing device for dental scaling instruments. The shaping and sharpening device is designed to restore both the original, precise sharpness and shape to the tip or blade of a surgical instrument. The sharpening and shaping device comprises a block of abrasive material such as ceramic or aluminum oxide. The block as a support means 30 comprises on its surface at least one groove having a specific, cross-sectional profile of abrasive surface 32.

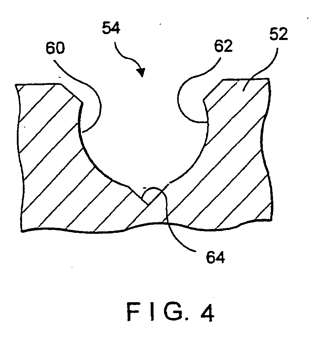

As may be observed from Figure 3, the cross-sectional side profile of the abrasive surface 32 includes portions which are negative images of the surface zones to be finished. Other portions or zones are relieved so as to avoid contact with any portion of the surface or the article to be finished. The profile of the abrasive surface 32 may be widely varied, depending on the article to be finished and the surface zones to be finished while excluding or not touching contiguous zones of the surface which are to remain unfinished. Thus, for example, the cross-sectional profile may consist of a rounded abrasive wall and a square, sub-wall non-abrasive footing or relief; or a rounded abrasive wall having a V-shaped, non-abrasive sub-wall footing or relief. Each of these various cross-sectional profiles is intended to impart a particular, specific shape or geometry to a surface such as a surgical tool like a dental curet in order to enable such a tool to function with accuracy and precision. These differently-shaped profiles can be made in a plurality of sizes so as to accommodate instrument tips and surfaces of different sizes. The conventional dental tool known as the curet has two different ends, each having a similarly shaped blade. The abrasive cross-sectional profiles of the apparatus of the invention allow for the sharpening and shaping of either end of a dental curet and does so whether the instrument is new or used and worn. As examples of other profiles for differently shaped articles to be finished, refer now to Figures 4-6, where the numerals 60, 62 indicate abrasive surface 32 portions which are negative images of the surface to be finished and the numeral 64 indicates a relief portion of noncontact. The relief portions 64 themselves may have a wide variety of cross-sectional side profiles, ranging from square to oval or elliptical, and are advantageously below the abrasive portions 60, 62.

As can be seen from Figures 4 to 6 the relief portions 64 are positioned intermediate the two active cutting surfaces 60, 62 of said abrasive surface.

The apparatus 50 of the invention may be operated as follows.

For example, the tip or blade edge of a dull and/or worn curet 10 is sharpened and shaped by the apparatus of the invention by inserting the blade or tip of the curet into an appropriate groove. The dentist or technician then proceeds to draw the tip of the curet 10 through the groove using a steady force. Alternatively, the apparatus 30 may be moved and the curet 10 held steady. In this manner, the lateral surface 20 of the curet 10 is accurately shaped by the negative image profiled abrasive surface 32. The relief portion 64 of the apparatus 30 provides non-abrasive clearance for specific selected surface areas of the curet 10 so as to avoid weakening by excessive unnecessary abrasion. The relief 64 of the apparatus correctly aids in the shaping of the instrument, which heretofore, could not be maintained when abraded across or against a flat abrasive surface.

The block 30, 52 may be generally fabricated from a hardened, abrasive material such as a ceramic, aluminum oxide or metal carbide (such as tungsten carbide). The block 30, 52 may be manufactured by dry powder compaction techniques, or by extruding the material through a die, in which case the abrasive surface 32 is an exposed surface of the abrasive block 52. In an alternate embodiment, block 52 may be fabricated from a plurality of different abrasive materials, so that the abrasive surface 32 is a composite of different abrasive materials, each selected for its particular effect on article surfaces to be finished. For example, where a coarse abrasion is required, the corresponding negative image portion of abrasive surface 32 may have a coarser abrasive than an adjacent zone where the corresponding surface portion of the article is only to be polished.

The instruments heretofore described as finished by the apparatus of the invention described above, are non-symmetrical in shape and are finished in accordance with the invention by moving them in a substantially straight line along a shaped or profiled abrasive surface.

## Claims

1. An apparatus for finishing at least one zone (20) on the curvilinear surface of an article of manufacture (10), said surface comprising a plurality of adjacent and contiguous zones (20), which comprises;
means for supporting a rigid abrasive surface (32); said means containing at least one groove (54,56);
an inflexible, abrasive surface (32) supported on the means for supporting such that the abrasive surface (32) lines the groove (54,56);
said abrasive surface (32) having
(i) a cross-sectional profile which comprises a negative image of a profile of the at least one zone (20), of a lateral curvilinear surface of the article, to be finished; and
(ii) a relief (64) corresponding to the zone or zones (20) to remain unfinished, said relief (64) being positioned intermediate two active cutting surfaces (60, 62) of said abrasive surface (32) and being incapable of contact with any surface of the article of manufacture, said cutting surfaces (60, 62), in use, both guiding laterally and finishing said at least one zone (20).

2. The apparatus of claim 1, wherein the means for supporting is a block (50).

3. The apparatus of claim 1, wherein the abrasive surface (32) is aluminium oxide.

4. The apparatus of claim 1, wherein the means for supporting and the abrasive surface (32) comprise the same materials.

5. The apparatus of claim 4, wherein the abrasive surface (32) is an exposed surface of the means for supporting.

6. An apparatus according to any one of the preceding claims wherein the apparatus comprises a block (50) of hardened, abrasives material designed to abrade, cut or otherwise shape metal surfaces of said articles (10), said block (50) having a generally flat top surface containing the at least one sharpening and shaping groove (54, 56) comprising said abrasive surface disposed therein, said at least one groove (54, 56) receiving a distal end of said article (10) for the purpose of sharpening and shaping said distal end when said article (10) is drawn through said groove (54, 56), said at least one groove (54, 56) having said two active cutting surfaces (60,62) for shaping said distal end, said relief (64) being positioned intermediate said two active cutting surfaces (60,62).

7. The apparatus in accordance with claim 6, wherein said active cutting surfaces (60,62) are disposed adjacent said relief surface (64).

8. The apparatus in accordance with claim 6, wherein said active cutting surfaces (60,62) are disposed above said relief surface (64).

9. The apparatus in accordance with any one of claims 6 to 8, wherein said relief surface (64) comprises a V-shaped wall.

10. The apparatus in accordance with any one of claims 6 to 8, wherein said relief surface (64) comprises a curvilinear-shaped wall.

11. The apparatus in accordance with any one of claims 6 to 8, wherein said relief surface (64) comprises a square-shaped wall.

12. The apparatus in accordance with any one of the preceding claims, wherein two grooves (54, 56) are disposed in said generally flat top surface of said block (50).

13. The apparatus in accordance with claim 12, wherein one of said two groove (54, 56) disposed in said generally flat top surface of said block (50) has a different size than does its companion groove (54, 56).

14. An apparatus according to any one of the preceding claims, wherein said article of manufacture (10) is a surgical instrument selected from a group consisting of curets, sickels, hoes, explorers and scalers.

15. A method for finishing at least one zone on a curvilinear surface of an article of manufacture (10), said surface comprising a plurality of adjacent and contiguous zones (20), which comprises the following steps:
providing means for supporting a rigid abrasive surface (32); said means containing at least one groove (54,56);
providing an inflexible, abrasive surface (32) supported on the means for supporting such that the abrasive surface (32) lines the groove (54,56) with said abrasive surface (32) having
(i) a cross-sectional profile which comprises a negative image of a profile of the at least one zone (20), of a lateral curvilinear surface of the article, to be finished;
(ii) a relief corresponding to the zone or zones (20) to remain unfinished, said relief (64) being positioned intermediate two active cutting surfaces (60, 62) of said abrasive surface and being incapable of contact with any surface of the article of manufacture; and
moving said at least one zone (20) of the surface of the article of manufacture (10) along said abrasive surface (32) for finishing said at least one zone (20), said cutting surfaces (60,62) both guiding laterally and finishing said at least one zone (20).

16. The method of claim 15 which includes providing a block (50) as means for supporting.

17. The method of claim 16 which includes providing an abrasive surface which is aluminium oxide.

18. The method of claim 16 which includes providing the means for supporting and the abrasive surface (32) made of the same materials.

19. The method of claim 18 which includes providing abrasive surface (32) as an exposed surface of the means for supporting.

20. A method in accordance with any one of claims 15 to 19, further comprising the following steps: providing the block (50) of hardened abrasive material designed to abrade, cut or otherwise shape metal surfaces of said articles, with said block (50) having a generally flat top surface containing the at least one sharpening and shaping groove (54, 56) disposed therein, placing a distal end of said article in said at least one groove (54, 56) for the purpose of sharpening and shaping said distal end; drawing said article through said at least one groove (54, 56), providing said at least one groove (54, 56) with said two active cutting surfaces (60,62) for shaping said distal end, said relief surface (64) for guiding said distal end in a non-cutting mode being positioned intermediate said two active cutting surfaces (60,62).

21. The method in accordance with claim 20 which includes providing said active cutting surfaces (60,62) adjacent said relief surface (64).

22. The method in accordance with claim 20 which includes providing said active cutting surfaces (60,62) above said relief surface (64).

23. The method in accordance with claim 20 which includes providing said relief surface (64) as a V-shaped wall.

24. The method in accordance with claim 20 which includes providing said relief surface (64) as a curvilinear-shaped wall.

25. The method in accordance with claim 20 which includes providing said relief surface (64) as a square-shaped wall.

26. The method in accordance with any one of claims 15 to 25 which includes providing two grooves (54, 56) disposed in said generally flat top surface of said block (50).

27. The method in accordance with claim 26 as dependant on claims 20 to 26 which includes providing one of said two grooves (54, 56) disposed in said generally flat top surface of said block (50) which has a different size than does its companion groove.

## Patentansprüche

1. Vorrichtung zur Feinstbearbeitung von mindestens einem Bereich (20) auf der krummlinigen Oberfläche eines fabrikmäßig hergestellten Gegenstands (10), wobei die Oberfläche eine Vielzahl benachbarter und an einander angrenzender Bereiche (20) umfasst, welche folgendes aufweist:
eine Einrichtung zum Abstützen einer starren Schleiffläche (32), wobei die Einrichtung mindestens eine Nute (54, 56) aufweist;
eine unelastische Schleiffläche (32), die sich auf der Einrichtung zum Abstützen in der Weise abstützt, dass die Schleiffläche (32) die Nut (54, 56) auskleidet;
wobei die Schleiffläche (32) folgendes umfasst:
(i) ein Querschnittsprofil, das ein negatives Abbild eines Profils des mindestens einen feinstzubearbeitenden Bereichs (20) einer seitlichen krummlinigen Oberfläche des Gegenstands umfasst; und
(ii) eine plastische Ausformung (64), die dem Bereich bzw. den Bereichen (20), der bzw. die unbearbeitet bleiben soll bzw. sollen, entspricht, wobei die plastische Ausformung in der Mitte zwischen zwei wirksamen spanenden Flächen (60, 62) der Schleiffläche (32) angeordnet ist und nicht in der Lage ist, mit irgendeiner Fläche des fabrikmäßig hergestellten Gegenstands in Berührung zu kommen, und wobei die spanenden Flächen (60, 62) im Betrieb den mindestens einen Bereich (20) sowohl seitlich führen als auch feinstbearbeiten.

2. Vorrichtung nach Anspruch 1, bei welcher die Einrichtung zum Abstützen ein Block (50) ist.

3. Vorrichtung nach Anspruch 1, bei welcher die Schleiffläche (32) aus Aluminiumoxid besteht.

4. Vorrichtung nach Anspruch 1, bei welcher die Einrichtung zum Abstützen und die Schleiffläche (32) die gleichen Werkstoffe enthalten.

5. Vorrichtung nach Anspruch 4, bei welcher die Schleiffläche (32) eine freiliegende Oberfläche der Einrichtung zum Abstützen ist.

6. Vorrichtung nach einem der vorhergehenden Ansprüche, bei welcher darin ein Block (50) aus gehärtetem Schleifmaterial vorgesehen ist, welcher so ausgelegt ist, dass er metallische Flächen des Gegenstands (10) abschleift, zerspant oder in anderer Weise formt, wobei der Block (50) eine im allgemeinen flache Oberseite aufweist, welche die mindestens eine Nut (54, 56) zum Schärfen und Formen enthält, in welcher die Schleiffläche angeordnet ist, wobei die mindestens eine Nut (54, 56) ein distales Ende des Gegenstands (10) zum Schärfen und Formen des distalen Endes aufnimmt, wenn der Gegenstand (10) durch die Nut (54, 56) gezogen wird, wobei die mindestens eine Nut (54, 56) zwei wirksame spanende Flächen (60, 62) zum Formen des distalen Endes aufweist, und wobei die plastische Ausformung (64) in der Mitte zwischen den zwei wirksamen spanenden Flächen (60, 62) angeordnet ist.

7. Vorrichtung nach Anspruch 6, bei welcher die wirksamen spanenden Flächen (60, 62) nahe der Oberfläche (64) mit der plastischen Ausformung angeordnet sind.

8. Vorrichtung nach Anspruch 6, bei welcher die wirksamen spanenden Flächen (60, 62) oberhalb der Oberfläche (64) mit der plastischen Ausformung (64) angeordnet sind.

9. Vorrichtung nach einem der Ansprüche 6 bis 8, bei welcher die Oberfläche (64) mit der plastischen Ausformung eine V-förmige Wandung aufweist.

10. Vorrichtung nach einem der Ansprüche 6 bis 8, bei welcher die Oberfläche mit der plastischen Ausformung (64) eine krummlinig geformte Wandung aufweist.

11. Vorrichtung nach einem der Ansprüche 6 bis 8, bei welcher die Oberfläche (64) mit der plastischen Ausformung eine quadratisch geformte Wandung aufweist.

12. Vorrichtung nach einem der vorhergehenden Ansprüche, bei welcher in der im Allgemeinen flachen Oberseite des Blocks (50) zwei Nuten (54, 56) angeordnet sind.

13. Vorrichtung nach Anspruch 12, bei welcher eine der beiden Nuten (54, 56), die in der im Allgemeinen flachen Oberseite des Blocks (50) angeordnet sind, eine andere Größe aufweist als die jeweils andere zugeordnete Nut (54, 56).

14. Vorrichtung nach einem der vorhergehenden Ansprüche, bei welcher der fabrikmäßig hergestellte Gegenstand (10) ein chirurgisches Instrument ist, das aus einer Gruppe gewählt ist, die aus Küretten, sichelförmigen Schneidinstrumenten, löffelförmigen Schneidinstrurnenten, Untersuchungsinstrumenten und Messinstrumenten besteht.

15. Verfahren zur Feinstbearbeitung von mindestens einem Bereich auf einer krummlinigen Oberfläche eines fabrikmäßig hergestellten Gegenstands (10), wobei die Oberfläche eine Vielzahl benachbarter und an einander angrenzender Bereiche (20) umfasst, welches folgende Schritte aufweist:
Bereitstellen einer Einrichtung zum Abstützen einer starren Schleiffläche (32), wobei die Einrichtung mindestens eine Nut (54, 56) enthält;
Bereitstellen einer unelastischen Schleiffläche (32), welche sich auf der Einrichtung zum Abstützen in der Weise abstützt, dass die Schleiffläche (32) die Nut (54, 56) auskleidet, wobei die Schleiffläche (32) folgendes umfasst:
(i) ein Querschnittsprofil, das ein negatives Abbild eines Profils des mindestens einen feinstzubearbeitenden Bereichs (20) einer seitlichen krummlinigen Oberfläche des Gegenstands umfasst; und
(ii) eine plastische Ausformung (64), die dem Bereich bzw. den Bereichen (20), der bzw. die unbearbeitet bleiben soll bzw. sollen, entspricht, wobei die plastische Ausformung in der Mitte zwischen zwei wirksamen spanenden Flächen (60, 62) der Schleiffläche (32) angeordnet ist und nicht in der Lage ist, mit irgendeiner Fläche des fabrikmäßig hergestellten Gegenstands in Berührung zu kommen,
Bewegen des mindestens einen Bereichs (20) der Oberfläche des fabrikmäßig hergestellten Gegenstands (10) entlang der Schleiffläche (32) zur Feinstbearbeitung des mindestens einen Bereichs (20), wobei die spanenden Flächen (60, 62) den mindestens einen Bereich (20) sowohl seitlich führen als auch feinstbearbeiten.

16. Verfahren nach Anspruch 15, welches den Schritt umfasst, bei dem ein Block (50) als Einrichtung zur Abstützung vorgesehen wird.

17. Verfahren nach Anspruch 16, welches den Schritt zur Bereitstellung einer Schleiffläche umfasst, die aus Aluminiumoxid besteht.

18. Verfahren nach Anspruch 16, welches den Schritt zur Bereitstellung der Einrichtung zur Abstützung und der Schleiffläche (32) umfasst, die aus den gleichen Werkstoffen bestehen.

19. Verfahren nach Anspruch 18, bei welchem die Schleiffläche (32) als freiliegende Oberfläche der Einrichtung zur Abstützung vorgesehen wird.

20. Verfahren nach einem der Ansprüche 15 bis 19, welches des Weiteren die folgenden Schritte umfasst: Vorsehen des Blocks (50) aus gehärtetem Schleifmaterial, der so ausgelegt ist, dass er metallische Flächen der Gegenstände abschleift, zerspant oder in anderer Weise formt, wobei der Block (50) eine im Allgemeinen flache Oberseite aufweist, welche die mindestens eine Nut (54, 56) zum Schärfen und Formen enthält, in welcher die Schleiffläche angeordnet ist; Anordnen des distalen Endes des Gegenstands in der mindestens einen Nut (54, 56) zum Schärfen und Formen des distalen Endes; Ziehen des Gegenstands durch die mindestens eine Nut (54, 56); Vorsehen der zwei wirksamen spanenden Flächen (60, 62) zum Formen des distalen Endes auf der mindestens einen Nut (54, 56), wobei die Oberfläche mit der plastischen Ausformung (64) zum Führen des distalen Endes in nicht-spanender Weise in der Mitte zwischen den zwei wirksamen spanenden Flächen (60, 62) angeordnet wird.

21. Verfahren nach Anspruch 20, welches den Schritt zum Vorsehen der wirksamen spanenden Flächen (60, 62) nahe der Oberfläche (64) mit der plastischen Ausformung umfasst.

22. Verfahren nach Anspruch 20, welches den Schritt zum Vorsehen der wirksamen spanenden Flächen (60, 62) oberhalb der Oberfläche (64) mit der plastischen Ausformung aufweist.

23. Verfahren nach Anspruch 20, welches den Schritt zum Vorsehen der Oberfläche (64) mit der plastischen Ausformung in Form einer V-förmigen Wandung umfasst.

24. Verfahren nach Anspruch 20, welches den Schritt zum Vorsehen der Oberfläche (64) mit der plastischen Ausformung in Form einer krummlinig geformten Wandung umfasst.

25. Verfahren nach Anspruch 20, welches den Schritt zum Vorsehen der Oberfläche (64) mit der plastischen Ausformung in Form einer quadratisch geformten Wandung umfasst.

26. Verfahren nach einem der Ansprüche 15 bis 25, welches den Schritt zum Vorsehen von zwei Nuten (54, 56) umfasst, die in der im Allgemeinen flachen Oberseite des Blocks (50) angeordnet sind.

27. Verfahren nach Anspruch 26 in Abhängigkeit von den Ansprüchen 20 bis 26, welches den Schritt umfasst, bei dem eine der zwei Nuten (54, 56), die in der im Allgemeinen flachen Oberseite des Blocks (50) angeordnet sind, in einer anderen Größe als die andere zugeordnete Nut vorgesehen wird.

## Revendications

1. Dispositif de finition d'au moins une zone (20) située sur la surface curviligne d'un article à fabriquer (10), ladite surface comportant une pluralité de zones adjacentes et contiguës (20), qui comportent :
des moyens de support d'une surface abrasive rigide (32), lesdits moyens comportant au moins une gorge (54, 56),
une surface abrasive inflexible (32) supportée sur les moyens de support de telle sorte que la surface abrasive (32) recouvre la gorge (54, 56),
ladite surface abrasive (32) ayant
(i) un profil en coupe qui constitue une image négative d'un profil de la au moins une zone (20) d'une surface latérale curviligne de l'article à finir, et
(ii) un creux (64) correspond à la zone ou aux zones (20) à laisser non-finies, ledit creux (64) étant positionné entre deux surfaces de taillage actives (60, 62) de ladite surface abrasive (32) et étant incapable de venir en contact avec une surface quelconque de l'article à fabriquer, lesdites surfaces de taillage (60, 62), en utilisation, toutes deux guidant latéralement et finissant ladite au moins zone (20).

2. Dispositif selon la revendication 1, dans lequel les moyens de support sont constitués d'un bloc (50).

3. Dispositif selon la revendication 1, dans lequel la surface abrasive (32) est en oxyde d'aluminium.

4. Dispositif selon la revendication 1, dans lequel les moyens de support et la surface abrasive (32) sont constitués du même matériau.

5. Dispositif selon la revendication 4, dans lequel la surface abrasive (32) est une surface exposée des moyens de support.

6. Dispositif selon l'une quelconque des revendications précédentes, dans lequel le dispositif comporte un bloc (50) de matériau abrasif durci conçu pour abraser, tailler ou mettre autrement en forme des surfaces métalliques desdits articles (10), ledit bloc (50) ayant une surface supérieure généralement plate contenant la au moins une gorge d'affûtage et de mise en forme (54, 56) comportant ladite surface abrasive disposée dans celle-ci, ladite au moins une gorge (54, 56) recevant une extrémité distale dudit article (10) dans le but d'affûter et de mettre en forme ladite extrémité distale lorsque ledit article (10) est tiré à travers ladite gorge (54, 56), ladite au moins une gorge (54, 56) ayant lesdites deux surfaces de taillage actives (60, 62) destinées à mettre en forme ladite extrémité distale, ledit creux (64) étant positionné entre lesdites deux surfaces de taillage actives (60, 62).

7. Dispositif selon la revendication 6, dans lequel lesdites surfaces de taillage actives (60, 62) sont disposées adjacentes à ladite surface de creux (64).

8. Dispositif selon la revendication 6, dans lequel lesdites surfaces de taillage actives (60, 62) sont disposées au-dessus de ladite surface de creux (64).

9. Dispositif selon l'une quelconque des revendications 6 à 8, dans lequel ladite surface de creux (64) est constituée d'une paroi en forme de V.

10. Dispositif selon l'une quelconque des revendications 6 à 8, dans lequel ladite surface de creux (64) est constituée d'une paroi ayant une forme curviligne.

11. Dispositif selon l'une quelconque des revendications 6 à 8, dans lequel ladite surface de creux (64) est constituée d'une paroi de forme carrée.

12. Dispositif selon l'une quelconque des revendications précédentes, dans lequel deux gorges (54, 56) sont disposées dans ladite surface supérieure généralement plate dudit bloc (50).

13. Dispositif selon la revendication 12, dans lequel une première desdites deux gorges (54, 56), disposées dans ladite surface supérieure généralement plate dudit bloc (50), a une dimension différente de celle de sa gorge correspondante (54, 56).

14. Dispositif selon l'une quelconque des revendications précédentes, dans lequel ledit article à fabriquer (10) est un instrument chirurgical sélectionné parmi un groupe constitué de curettes, faucilles de détartrage, sondes exploratrices, et dispositifs de détartrage.

15. Procédé de finition d'au moins une zone située sur une surface curviligne d'un article à fabriquer (10), ladite surface comportant une pluralité de zones adjacentes et contiguës (20), qui comporte les étapes consistant à :
fournir des moyens de support d'une surface abrasive rigide (32), lesdits moyens contenant au moins une gorge (54, 56),
fournir une surface abrasive inflexible (32) supportée sur les moyens de support de telle sorte que la surface abrasive (32) recouvre la gorge (54, 56), ladite surface abrasive (32) ayant
(i) un profil en coupe qui constitue une image négative du profil de la au moins une zone (20) d'une surface curviligne latérale de l'article à finir,
(ii) un creux correspondant à la zone ou les zones (20) à laisser non-finies, ledit creux (64) étant positionné entre deux surfaces de taillage actives (60, 62) de ladite surface abrasive et étant incapable de venir en contact avec une surface quelconque de l'article à fabriquer, et
déplacer ladite au moins une zone (20) de la surface de l'article à fabriquer (10) le long de ladite surface abrasive (32) pour finir ladite au moins une zone (20), lesdites surfaces de taillage (60, 62) guidant latéralement et finissant toutes deux ladite au moins une zone (20).

16. Procédé selon la revendication 15, qui inclut la fourniture d'un bloc (50) en tant que moyens de support.

17. Procédé selon la revendication 16, qui inclut de fournir une surface abrasive qui est en oxyde d'aluminium.

18. Procédé selon la revendication 16, qui inclut de fournir les moyens de support et la surface abrasive (32), constitués du même matériau.

19. Procédé selon la revendication 18, qui inclut de fournir une surface abrasive (32) en tant que surface exposée des moyens de support.

20. Procédé selon l'une quelconque des revendications 15 à 19, comportant de plus les étapes consistant à : fournir le bloc (50) de matériau abrasif durci conçu pour abraser, tailler ou mettre autrement en forme des surfaces métalliques desdits articles, ledit bloc (50) ayant une surface supérieure généralement plate contenant la au moins une gorge d'affûtage et de mise en forme (54, 56) disposée dans celle-ci, positionner une extrémité distale dudit article dans ladite au moins une gorge (54, 56) dans le but d'affûter et de mettre en forme ladite extrémité distale, tirer ledit article (10) à travers ladite au moins une gorge (54, 56), munir ladite au moins une gorge (54, 56) de deux surfaces de taillage actives (60, 62) pour mettre en forme ladite extrémité distale, ladite surface de creux (64) pour guider ladite extrémité distale dans un mode non-taillant étant positionnée entre lesdites deux surfaces de taillage actives (60, 62).

21. Procédé selon la revendication 20, qui inclut de fournir lesdites surfaces de taillage actives (60, 62) adjacentes à ladite surface de creux (64).

22. Procédé selon la revendication 20, qu inclut de fournir lesdites surfaces de taillage actives (60, 62) au-dessus de ladite surface de creux (64).

23. Procédé selon la revendication 20, qui inclut de fournir ladite surface de creux (64) en tant que paroi en forme de V.

24. Procédé selon la revendication 20, qui inclut de fournir ladite surface de creux (64) en tant que surface de forme curviligne.

25. Procédé selon la revendication 20, qui inclut de fournir ladite surface de creux (64) en tant que paroi de forme carrée.

26. Procédé selon l'une quelconque des revendications 15 à 25, qui inclut de fournir deux gorges (54, 56) disposées dans ladite surface supérieure généralement plate dudit bloc (50).

27. Procédé selon la revendication 26 lorsqu'elle dépend des revendications 20 à 26, qui inclut de fournir une desdites deux gorges (54, 56) disposée dans ladite surface supérieure généralement plate dudit bloc (50) qui a une taille différente de celle de sa gorge accompagnatrice.
